# EUROPEAN PATENT APPLICATION

(11) **EP 4 685 019 A1**
(43) Date of publication of application: **28.01.2026**
(21) Application number: 25181388.7
(22) Date of filing: 06.06.2025
(51) Int. Cl.: B60T 7/12

(54) **DRIVER ASSISTANCE CONTROL DEVICE, DRIVER ASSISTANCE METHOD, AND COMPUTER PROGRAM**

(30) Priority: 24.07.2024 JP 2024118613
(71) Applicant: TOYOTA JIDOSHA KABUSHIKI KAISHA, Toyota-shi, Aichi-ken 471-8571 (JP)
(72) Inventor: MORIMOTO, Kazuhiro, TOYOTA-SHI, AICHI-KEN, 471-8571 (JP); TANAKA, Yusuke, TOYOTA-SHI, AICHI-KEN, 471-8571 (JP); FUKAYA, Motohiro, TOYOTA-SHI, AICHI-KEN, 471-8571 (JP); TOSHIMA, Kohei, TOYOTA-SHI, AICHI-KEN, 471-8571 (JP)
(74) Representative: Cabinet Beau de Loménie

(57) **Abstract**

A driver assistance control device (6) of a vehicle (100) is configured to perform driver assistance controlling at least a brake actuator of the vehicle (100) to make the vehicle stop if it is judged that a driver of the vehicle (100) is in an abnormal state where continuation of driving of the vehicle (100) would be difficult and control the brake actuator so that a deceleration degree of the vehicle (100) has become smaller when an intervehicle distance of the vehicle (100) with a following vehicle is increased by a large margin during deceleration by the driver assistance.

## Description

### FIELD

The present invention relates to a driver assistance control device, driver assistance method, and computer program.

### BACKGROUND

Japanese Unexamined Patent Publication No. 2021-109559 discloses a conventional driver assistance system which is configured so as to make a vehicle decelerate and to hold the vehicle in a stopped state as deceleration stop control when it is judged a driver is in an abnormal state where he has lost his ability to operate the vehicle.

### SUMMARY

If trying to perform deceleration stop control without considering a following vehicle, a vehicle is liable to be rear ended by the following vehicle at the time of vehicle deceleration (time of braking) due to deceleration stop control.

The present invention was made taking note of such a problem and has as its object to keep a vehicle from being rear ended by a following vehicle at the time of vehicle deceleration due to deceleration stop control.

To solve this problem, a driver assistance control device of a vehicle, according to one aspect of the present invention, is configured to perform driver assistance controlling at least a brake actuator of the vehicle to make the vehicle stop if it is judged that a driver of the vehicle is in an abnormal state where continuation of driving of the vehicle would be difficult and control the brake actuator so that a deceleration degree of the vehicle has become smaller when an intervehicle distance of the vehicle with a following vehicle is increased by a large margin during deceleration by the driver assistance.

Further, a driver assistance method of a vehicle, according to one aspect of the present invention, which is performed by a control device, comprises performing driver assistance controlling at least a brake actuator of the vehicle to make the vehicle stop if it is judged that a driver of the vehicle is in an abnormal state where continued driving of the vehicle would be difficult and controlling the brake actuator so that a deceleration degree of the vehicle has become smaller when an intervehicle distance of the vehicle with a following vehicle is increased by a large margin during deceleration by the driver assistance.

Further, a computer program according to one aspect of the present invention makes a computer run processing to perform driver assistance controlling at least a brake actuator of the vehicle to make the vehicle stop if it is judged that a driver of the vehicle is in an abnormal state where continued driving of the vehicle would be difficult and control the brake actuator so that a deceleration degree of the vehicle has become smaller when an intervehicle distance of the vehicle with a following vehicle is increased by a large margin during deceleration by the driver assistance.

According to these aspects of the present invention, it is possible to keep a vehicle from being rear ended by a following vehicle at the time of vehicle deceleration due to deceleration stop control.

### BRIEF DESCRIPTION OF DRAWINGS

FIG. 1 is a schematic view of the configuration of a vehicle according to one embodiment of the present invention.
FIG. 2 is a flow chart for explaining a problem arising when there is a first following vehicle and a second following vehicle behind a vehicle during deceleration stop control.
FIG. 3 is a flow chart for explaining deceleration stop control according to one embodiment of the present invention.

### DESCRIPTION OF EMBODIMENTS

Below, referring to the drawings, an embodiment of the present invention will be explained in detail. Note that, in the following explanation, similar component elements are assigned the same reference notations.

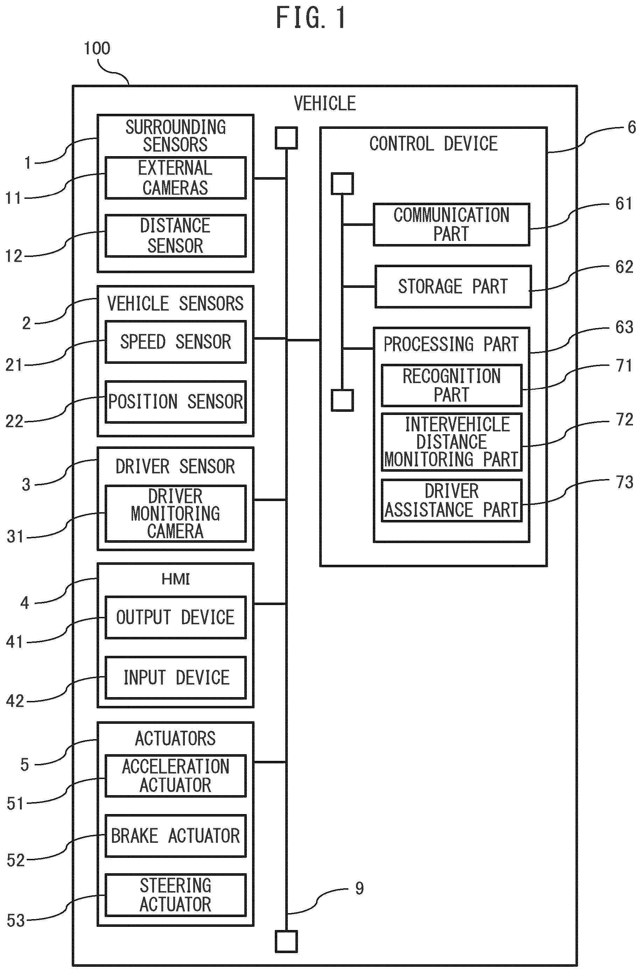

FIG. 1 is a schematic view of the configuration of a vehicle 100 according to one embodiment of the present invention.

The vehicle 100 is provided with surrounding sensors 1, vehicle sensors 2, a driver sensor 3, an HMI (human machine interface) 4, actuators 5, and a control device 6. The surrounding sensors 1, vehicle sensors 2, driver sensor 3, HMI 4, actuators 5, and control device 6 are respectively connected to be able to communicate through an internal vehicle network 9 based on a Control Area Network.

The surrounding sensors 1 are sensors for generating surrounding data showing the state of the surroundings of the vehicle 100. In the present embodiment, as surrounding sensors 1, one or more external cameras 11 for capturing the surroundings of the vehicle 100 and one or more distance sensors 12 for measuring the distances to other vehicles and other various objects present in the surroundings of the vehicle 100 are provided.

An external camera 11 captures the surroundings of the vehicle 100 by a predetermined frame rate (for example, 10 Hz to 40 Hz) and generates a surrounding image showing the surroundings of the vehicle 100. An external camera 11 sends a generated surrounding image as surrounding data to the control device 6 each time generating a surrounding image.

A distance sensor 12 emits a laser beam, electric wave, ultrasonic wave, etc. to a distance measurement region in the surroundings of its vehicle and receives the reflected light of the emitted laser beam, the reflected electric wave of the emitted electric wave, or the reflected wave of the ultrasonic wave, etc. Further, a distance sensor 12 measures the distances to various objects present in the distance measurement region based on the received reflected beam or reflected wave. A distance sensor 12 sends distance measurement data linking the distance to each object and the coordinate information of each object to the control device 6 as surrounding data. As an example of a distance sensor 12, for example, a lidar (light detection and ranging) device emitting a laser beam and measuring the distance based on the reflected light, a millimeter wave radar sensor emitting an electric wave and measuring distance based on the reflected wave, etc. may be mentioned.

A vehicle sensor 2 is a sensor for generating vehicle data showing the state of the vehicle 100. In the present embodiment, the vehicle 100 is provided with, as vehicle sensors 2, a speed sensor 21 generating speed data showing a running speed of the vehicle 100, a distance sensor 22 generating latitude and longitude and current position data showing the current position of the vehicle 100, etc. However, the vehicle sensors 2 are not limited to these sensors. The data acquired by the sensors 21 and 22 are sent as vehicle data to the control device 6.

A driver sensor 3 is a sensor for generating driver data showing the state of a driver. The vehicle 100 according to the present embodiment is provided with a driver sensor 3 comprised of a driver monitor camera 31 for capturing the appearance of a driver including a face of the driver. The driver monitor camera 31 captures the appearance of the driver by a predetermined frame rate (for example, 10 Hz to 40 Hz) and generates an appearance image in which the appearance of the driver is shown. The driver monitor camera 31 sends a generated appearance image as driver data to the control device 6 each time generating an appearance image of the driver.

The HMI 4 is a user interface for transfer of information between the vehicle 100 and its occupants. The HMI 4 is provided with an output device 41 for notifying the vehicle occupants through the physical senses of the vehicle occupants (for example, sight, hearing, touch, etc.) and an input device 42 for vehicle occupants to perform entry operations and response operations. The output device 41 is, for example, a display (for example, meter display or center display, heads up display, etc.), a speaker, etc. The input device 42 is, for example, a touch panel, microphone, etc.

The HMI 4 notifies information according to the output signals received from the control device 6 through the output device 41 to the vehicle occupants and send data input through the input device 42 by the vehicle occupants to the control device 6.

The HMI 4 may be installed in the vehicle 100 in advance and may be a smart phone or other terminal owned by a vehicle occupant. In the latter case, for example, it is possible to transfer information by communication by short distance wireless communication between the vehicle 100 and the terminal of the vehicle occupant and may communicate between the terminal of the vehicle occupant and an outside server (not shown) and trade information indirectly through the server.

The actuators 5 are devices used for driving control of the vehicle 100. The vehicle 100 according to the present embodiment is provided with, as actuators 5, an acceleration actuator 51 for controlling acceleration of the vehicle 100 (for example, at least one of an engine and motor), a brake actuator 52 for controlling braking of the vehicle 100 (for example, a hydraulic actuator), and a steering actuator 53 for controlling steering of the vehicle 100 (for example, a steering motor).

The control device 6 is an ECU (electronic control unit) provided with a communication part 61, storage part 62, and processing part 63.

The communication part 61 has an interface circuit for connecting the control device 6 to the internal vehicle network 9. The communication part 61 supplies the various data received from the various sensors and HMI 4 etc. to the processing part 63. Further, the communication part 61 outputs the various signals output from the processing part 63 to the HMI 4, actuators 5, etc.

The storage part 62 has an HDD (hard disk drive) or SSD (solid disk drive), semiconductor memory, or other storage medium and stores various computer programs and data etc. used for processing at the processing part 63.

The processing part 63 has one or more CPUs (central processing units) and their peripheral circuits and runs various computer programs stored in the storage part 62. The processing part 63, for example, is a processor. The processing part 63 may further have other processing circuits such as a logical operation unit, numeric operation unit, or graphic processing unit. The processing part 63 performs processing in accordance with the computer programs to thereby function as recognition part 71, vehicle distance monitoring part 72, and driver assistance part 73 and operates as modules for realizing predetermined functions. In the following explanation, when explaining processing having the modules 71 to 73 as the grammatical subjects, this shows the processing part 63 running a program for realizing the modules 71 to 73.

Below, the contents of the specific processing performed at the control device 6 will be explained. That is, the contents of the modules 71 to 73 realized by the processing part 63 running processing according to computer programs will be explained.

The recognition part 71 recognizes the objects and features in the surroundings of the vehicle 100. The recognition part 71, for example, successively inputs surrounding images received from the external camera 11 into a classifier to thereby recognize another vehicle, motorcycle, pedestrian, or other object in the surrounding images and a curb or fence or other object similar to this (below, referred to as a "sectioning object") or a road marking (for example, a dividing line defining a driving lane etc.) and other features. The classifier, for example, can be made a convolutional neural network (CNN) having a plurality of convolutional layers connected in series from the input side toward the output side. Further, the recognition part 71, for example, uses standard sizes of objects and features stored in the storage part 62 for each type of the objects and features and sizes of objects and features recognized in the surrounding image to calculate the distances from the host vehicle to the objects and features and calculate the positions of the objects and features. Further, the recognition part 71, for example, groups the light reflection points satisfying predetermined conditions as reflection points of laser light reflected from the same objects among the plurality of reflection points detected by the distance sensors 12 to thereby recognize other vehicles and other objects present in the surroundings of the host vehicle and detect the distances to the objects. Note that the method of recognizing objects and features is not limited to the above such method. Various known technique may be used for recognition.

The intervehicle distance monitoring part 72 monitors the intervehicle distance with a following vehicle (other vehicle or motorcycle) right behind running in the same driving lane as the vehicle 100 measured by the distance sensor 12 when the following vehicle is recognized by the recognition part 71.

The driver assistance part 73 controls the actuators 5 and performs driver assistance accompanied with driving control of the vehicle 100 based on the objects and features recognized by the recognition part 71. In the present embodiment, the driver assistance part 73 can perform driver assistance accompanied with driving control of the vehicle 100 by level 3 of a driving control level defined by the SAE (Society of Automotive Engineers), that is, a driving control level not requiring operations of the actuators 51 to 53 by the driver and monitoring of the surroundings. Further, the driver assistance part 73 can perform driver assistance accompanied with driving control of the vehicle 100 by a driving control level in which the driver is involved in driving the vehicle 100, for example, level 1 or level 2 of a driving control level defined by the SAE.

As one type of driver assistance accompanied with driving control of the vehicle 100, when, for example, due to a sudden change in physical condition etc., the driver has fallen in an abnormal state where continued driving of the vehicle 100 would be difficult, the driver assistance part 73 performs deceleration stop control making the vehicle 100 decelerate by less than or equal to a predetermined deceleration degree D[m/s² ] (for example 4.0 m/s²) and holds the vehicle 100 in the stopped state.

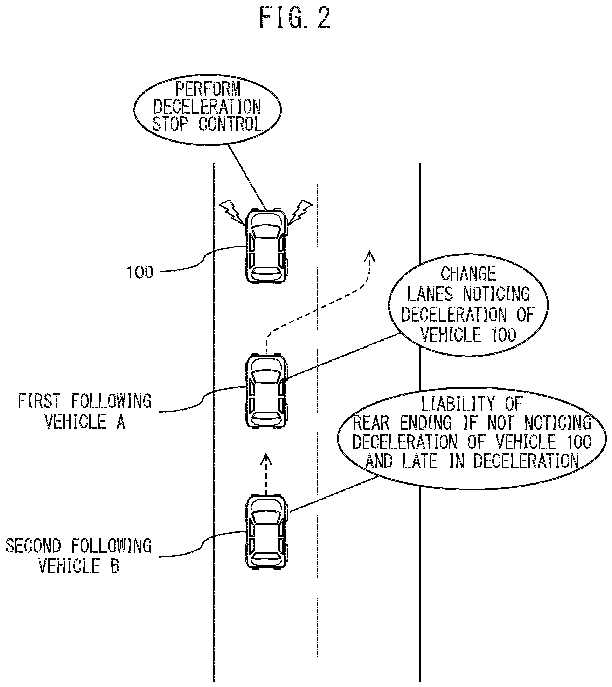

Here, if not considering the following vehicle when performing deceleration stop control, performing deceleration stop control is liable to cause a rear ending accident by the following vehicle. For example, as shown in FIG. 2, if there are the first following vehicle A and the second following vehicle B behind the vehicle 100, if the driver of the vehicle 100 falls in an abnormal state where continued driving would be difficult and deceleration stop control is performed at the vehicle 100, it is possible for the first following vehicle A right behind the vehicle 100 to perform a maneuver to avoid the vehicle 100 along with deceleration of the vehicle 100 (for example, changing a lane or passing).

On the other hand, the driver of the second following vehicle B will not necessarily notice the deceleration of the vehicle 100 two vehicles ahead. In such a case, the second following vehicle B will notice that the vehicle 100 is decelerating after the first following vehicle A avoids the vehicle 100. As a result, the second following vehicle B will be late in decelerating. If the vehicle 100 performs deceleration stop control, the vehicle 100 is decelerating in order to stop the vehicle, therefore if the second following vehicle B ends up late in decelerating, the speed difference between the vehicle 100 and the second following vehicle B will easily become larger and the second following vehicle B will be liable to rear end the vehicle 100 during the deceleration stop control. In particular, if the driver of the first following vehicle A is late in noticing deceleration of the vehicle 100 and the driver of the first following vehicle A performs a maneuver to avoid the vehicle 100 in a rushed manner, the speed difference between the vehicle 100 and the second following vehicle B will easily become larger and the possibility of the second following vehicle B rear ending the vehicle 100 during deceleration stop control will become higher.

Therefore, in the present embodiment, when, during deceleration stop control, if the intervehicle distance with the following vehicle monitored by the intervehicle distance monitoring part 72 has increased by a large margin, that is, when it is possible that the following vehicle of the vehicle 100 has changed from the first following vehicle A one vehicle behind to the second following vehicle B two vehicles behind, the deceleration degree of the vehicle 100 is lowered from the usual deceleration degree.

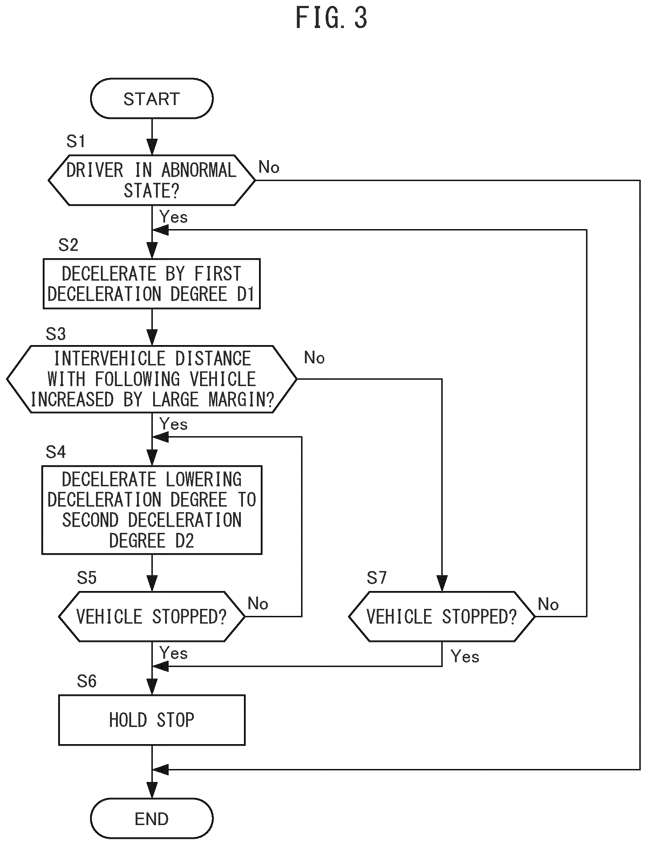

FIG. 3 is a flow chart for explaining deceleration stop control according to the present embodiment.

At step S1, the control device 6 judges whether the driver is in an abnormal state where continued driving would be difficult (below, simply referred to as an "abnormal state"). In the present embodiment, the control device 6 judges that the driver has fallen in an abnormal state if a predetermined presumed abnormal state continues for a predetermined time T1. If the driver has fallen in an abnormal state, the control device 6 proceeds to the processing of step S2. On the other hand, if the driver has not fallen in an abnormal state, the control device 6 ends the current processing.

The presumed abnormal state is a state where it is deemed that the driver has fallen in an abnormal state. As the presumed abnormal state, for example, if performing driver assistance accompanied with driving control of the vehicle 100 at less than or equal to a level 2 driving control level, it is possible to mention a state where the driver is not performing any steering operation of the steering wheel. Whether or not the driver is performing any steering operation of the steering wheel can, for example, but judged based on the magnitude of the steering torque acting on the steering shaft turning along with the steering wheel. Further, it is also possible to judge whether the driver is in a presumed abnormal state from the appearance etc. of the driver based on, for example, the image of the driver monitor camera regardless of the driving control level.

Note that, in the present embodiment, when a presumed abnormal state continues for a predetermined time T0 (T0 is a time shorter than T1), a warning is started to be given to the driver through the HMI. Due to this, it is possible to perform deceleration stop control only when the driver falls in an abnormal state where he is unable to respond to the warning.

At step S2, the control device 6 starts the deceleration stop control. Specifically, the control device 6 controls the brake actuator 52 so that the deceleration degree of the vehicle 100 becomes a predetermined first deceleration degree D1 (for example 4.0 m/s²) so as to start the deceleration of the vehicle 100. At that time, it may perform steering control together with the brake control of the vehicle 100 so that, for example, the vehicle 100 runs along a driving lane or a driving path of the preceding vehicle.

At step S3, the control device 6 judges whether the intervehicle distance of the vehicle 100 with the following vehicle has (momentarily) increased by a large margin. For example, the control device 6 can judge that the intervehicle distance with the following vehicle has increased by a large margin if the intervehicle distance with the following vehicle measured by the distance sensor 12 has become greater than the most recent measurement result by greater than or equal to a predetermined value. Further, for example, the control device 6 can judge that the intervehicle distance with the following vehicle has increased by a large margin when detecting that the following vehicle has performed a maneuver for avoiding the vehicle 100 (for example, changed a lane or passing it) based on surrounding images captured by the external camera 11. If the intervehicle distance of the vehicle 100 with the following vehicle has increased by a large margin, the control device 6 proceeds to the processing of step S4. On the other hand, if the intervehicle distance with the following vehicle has not increased by a large margin, the control device 6 proceeds to the processing of step S7.

At step S4, the control device 6 controls the brake actuator 52 so that the deceleration degree of the vehicle 100 becomes a predetermined second deceleration degree D2 (for example 2.0 m/s²) smaller than the first deceleration degree D1 so as to decelerate the vehicle 100. That is, it lowers the deceleration degree of the vehicle 100 from the first deceleration degree D1 to the second deceleration degree D2 to slow the deceleration of the vehicle 100.

At step S5, the control device 6 judges whether the vehicle 100 has stopped. If the vehicle 100 has stopped, the control device 6 proceeds to the processing of step S6. On the other hand, if the vehicle 100 has not stopped, the control device 6 returns to the processing of step S4 and continues to decelerate the vehicle 100 by the second deceleration degree D2.

At step S6, the control device 6, for example, automatically actuates a parking brake etc. to hold the vehicle 100 stopped.

At step S7, the control device 6 judges whether the vehicle 100 has stopped. If the vehicle 100 has stopped, the control device 6 proceeds to the processing of step S6. On the other hand, if the vehicle 100 has not stopped, the control device 6 returns to the processing of step S2 and continues to decelerate the vehicle 100 by the first deceleration degree D1.

The control device 6 (driver assistance control device) of the vehicle 100 according to the present embodiment explained above is configured to perform driver assistance at least controlling brake actuator 52 of the vehicle 100 to make the vehicle 100 stop if it was judged that the driver of the vehicle 100 was in an abnormal state where continued driving of the vehicle 100 would be difficult and to control the brake actuator 52 so that the deceleration degree of the vehicle 100 becomes smaller when the intervehicle distance of the vehicle 100 with the following vehicle has increased by a large margin during deceleration by driver assistance.

Specifically, the control device 6 is configured to control the brake actuator 52 so that the deceleration degree of the vehicle 100 becomes a predetermined first deceleration degree D1 to start the deceleration of the vehicle 100 and, when the intervehicle distance of the vehicle 100 with the following vehicle has increased by a large margin, control the brake actuator 52 so that the deceleration degree of the vehicle 100 becomes a predetermined second deceleration degree D2 smaller than the first deceleration degree D1.

Due to this, even if a vehicle following two vehicles behind the vehicle 100 (second following vehicle B) does not notice that the vehicle 100 is in the middle of decelerating due to deceleration stop control and in that state a vehicle following one vehicle behind the vehicle 100 (first following vehicle A) performs a lane change or other maneuver to avoid the vehicle 100, since the deceleration of the vehicle 100 is decreased to make the deceleration of the vehicle 100 more moderate, it is possible to keep the vehicle following two vehicles behind the vehicle 100 (second following vehicle B) from rear ending the vehicle 100.

Above, embodiments of the present invention were explained, but the above embodiments only show some of the examples of application of the present invention and are not intended to limit the technical scope of the invention to the specific constitutions of the embodiments.

For example, in the above embodiments, the computer program run in the control device 6 may also be provided in a form recorded in a computer readable portable recording medium such as a semiconductor memory, magnetic recording medium, or optical recording medium and may also be provided as a computer program product. Further, in the above embodiments, the control device 6 is used to judge whether the driver has fallen into an abnormal state, but another control device may also be used to judge this and the result of judgment may be acquired by the control device 6.

## Claims

1. A driver assistance control device (6) of a vehicle (100), wherein
the driver assistance control device (6) is configured to:
perform driver assistance controlling at least a brake actuator of the vehicle (100) to make the vehicle stop if it is judged that a driver of the vehicle (100) is in an abnormal state where continuation of driving of the vehicle (100) would be difficult; and
control the brake actuator so that a deceleration degree of the vehicle (100) has become smaller when an intervehicle distance of the vehicle (100) with a following vehicle is increased by a large margin during deceleration by the driver assistance.

2. The driver assistance control device (6) according to claim 1, configured to control the brake actuator to start deceleration of the vehicle so that the deceleration degree of the vehicle (100) becomes a predetermined first deceleration degree when performing the driver assistance and to control the brake actuator so that the deceleration degree of the vehicle (100) becomes a predetermined second deceleration degree smaller than the first deceleration degree when an intervehicle distance of the vehicle (100) with the following vehicle is increased by a large margin.

3. A driver assistance method of a vehicle performed by a control device (6), the driver assistance method comprising:
performing driver assistance controlling at least a brake actuator of the vehicle (100) to make the vehicle stop if it is judged that a driver of the vehicle (100) is in an abnormal state where continued driving of the vehicle (100) would be difficult; and
controlling the brake actuator so that a deceleration degree of the vehicle (100) has become smaller when an intervehicle distance of the vehicle (100) with a following vehicle is increased by a large margin during deceleration by the driver assistance.

4. A computer program making a computer running processing to:
perform driver assistance controlling at least a brake actuator of the vehicle (100) to make the vehicle stop if it is judged that a driver of the vehicle (100) is in an abnormal state where continued driving of the vehicle (100) would be difficult; and
control the brake actuator so that a deceleration degree of the vehicle (100) has become smaller when an intervehicle distance of the vehicle (100) with a following vehicle is increased by a large margin during deceleration by the driver assistance.
